# EUROPEAN PATENT APPLICATION

(11) **EP 4 383 171 A1**
(43) Date of publication of application: **12.06.2024**
(21) Application number: 23194445.5
(22) Date of filing: 31.08.2023
(51) Int. Cl.: G06Q 20/20, G06V 20/52, G07G 1/00, G07G 3/00

(54) **INFORMATION PROCESSING PROGRAM, INFORMATION PROCESSING METHOD, AND INFORMATION PROCESSING APPARATUS**

(30) Priority: 07.12.2022 JP 2022195979
(71) Applicant: Fujitsu Limited, Kawasaki-shi, Kanagawa 211-8588 (JP)
(72) Inventor: ISHIDA, Ryo, Kawasaki-shi, Kanagawa 211-8588 (JP); UCHIDA, Daisuke, Kawasaki-shi, Kanagawa 211-8588 (JP); AOKI, Yasuhiro, Kawasaki-shi, Kanagawa 211-8588 (JP)
(74) Representative: Hoffmann Eitle

(57) **Abstract**

An information processing apparatus acquires video image data on a person who is scanning a code of a commodity product to an accounting machine. The information processing apparatus specifies, by analyzing the acquired video image data, the commodity product that has been gripped by the person within a range of an area that is set for the code of the commodity product to be scanned to the accounting machine. The information processing apparatus acquires, by scanning the code of the commodity product by the accounting machine, commodity product information that has been registered to the accounting machine. The information processing apparatus generates, by comparing the acquired commodity product information with the specified commodity product that has been gripped by the person, an alert connected to an abnormality of a behavior of registering the commodity product to the accounting machine.

## Description

### FIELD

The embodiments discussed herein are related to an information processing program, an information processing method, and an information processing apparatus.

### BACKGROUND

In stores, such as supermarkets and convenience stores, self-service checkout registers are becoming widely used. A self-service checkout register is a point of sale (POS) checkout register system in which a user who purchases commodity products perform a series of processes between a process of reading bar code assigned to each of the commodity products and a process of calculating a payment amount. For example, by installing the self-service checkout register, it is possible to improve a labor shortage caused by a decrease in population and suppress labor costs.

Patent Document 1: Japanese Laid-open Patent Publication No. 2020-53019

### TECHNICAL PROBLEM

However, in the technology described above, it is difficult to detect a fraud. For example, at an accounting machine, such as a self-service checkout register, an inevitable error, an intentional fraud, or the like is made by a user, thus resulting in incurring an unpaid amount or the like.

An example of the inevitable error includes a scan omission of a commodity product as a result of a user forgetting to scan the commodity product and moving the commodity product from a basket to a checkout bag, and the like. In addition, examples of the intentional fraud include a bar code hiding occurring when a user pretends to scan a commodity product by hiding only a bar code by the user's fingers, a read error occurring when a user erroneously reads a bar code assigned to a can instead of a bar code assigned to a beer case as a result of different bar codes being assigned to each of the beer case containing, for example, a set of six cans and the individual cans, and the like.

In addition, it is conceivable to detect a fraud by automatically counting the number of commodity products by installing a weight sensor in each of the self-service checkout registers; however, a cost is excessively high, and this method is unrealistic for, in particular, large-scale stores and stores having operations across the country.

In addition, at the self-service checkout register, there is another aspect in which it is difficult to detect a fraudulent act because a scan of a commodity product code or calculation of a payment amount is entrusted by a user himself or herself. For example, even if image recognition Artificial Intelligence (AI) is used in an aspect of detecting the fraudulent act described above, a huge amount of training data is needed for training of the image recognition AI. However, in stores, such as supermarkets and convenience stores, many types of commodity products are present, and, in addition, a life cycle of each of the commodity products is short, so that a replacement of each of commodity products frequently occurs. It is difficult to tune the image recognition AI in accordance with the life cycle of these types of commodity products, or it is difficult to perform training of new image recognition AI.

Accordingly, it is an object in one aspect of an embodiment of the present invention to provide an information processing program, an information processing method, and an information processing apparatus capable of detecting an error or a fraudulent behavior made or conducted by a user at an accounting machine.

### SUMMARY

According to an aspect of an embodiment, an information processing program causes a computer to execute a process including: acquiring video image data on a person who is scanning a code of a commodity product to an accounting machine; specifying, by analyzing the acquired video image data, the commodity product that has been gripped by the person within a range of an area that is set for the code of the commodity product to be scanned to the accounting machine; acquiring, by scanning the code of the commodity product by the accounting machine, commodity product information that has been registered to the accounting machine; and generating, by comparing the acquired commodity product information with the specified commodity product that has been gripped by the person, an alert connected to an abnormality of a behavior of registering the commodity product to the accounting machine.

### BRIEF DESCRIPTION OF DRAWINGS

FIG. 1 is a diagram illustrating an example of the overall configuration of a self-service checkout register system according to a first embodiment;
FIG. 2 is a diagram illustrating a detection example of an abnormal behavior according to the first embodiment;
FIG. 3 is a functional block diagram illustrating a functional configuration of an information processing apparatus according to the first embodiment;
FIG. 4 is a diagram illustrating training data;
FIG. 5 is a diagram illustrating machine learning performed on a first machine learning model;
FIG. 6 is a diagram illustrating machine learning performed on a second machine learning model;
FIG. 7 is a diagram illustrating machine learning performed on a third machine learning model;
FIG. 8 is a diagram illustrating a detection example 1 of an abnormal behavior according to the first embodiment;
FIG. 9 is a diagram illustrating a detection example 2 of an abnormal behavior according to the first embodiment;
FIG. 10 is a diagram illustrating detection of a commodity product;
FIG. 11 is a diagram illustrating a detection example 3 of an abnormal behavior according to the first embodiment;
FIG. 12 is a report example of an alert;
FIG. 13 is a diagram illustrating an alert display example indicated with respect to the self-service checkout register;
FIG. 14 is a diagram illustrating an alert display example indicated with respect to a store clerk;
FIG. 15 is a flowchart illustrating the flow of a process;
FIG. 16 is a diagram illustrating an example of a hardware configuration; and
FIG. 17 is a diagram illustrating an example of a hardware configuration of the self-service checkout register.

### DESCRIPTION OF EMBODIMENTS

Preferred embodiments will be explained with reference to accompanying drawings. Furthermore, the present embodiment is not limited by the embodiments. In addition, each of the embodiments can be used in any appropriate combination as long as they do not conflict with each other.

### (a) First Embodiment

### Explanation of self-service checkout register system

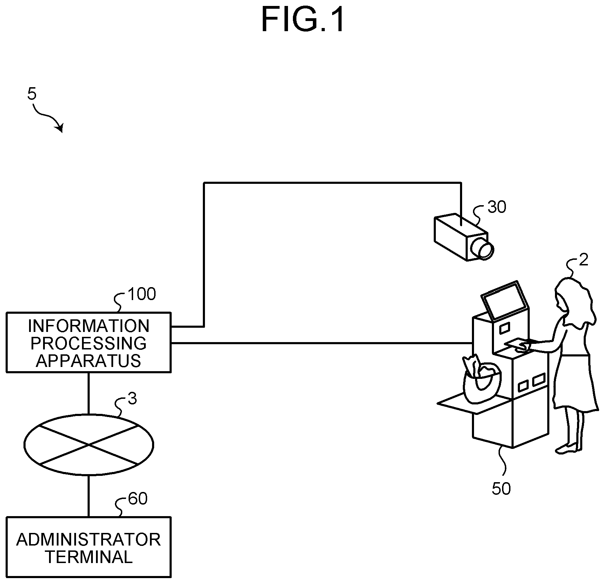

FIG. 1 is a diagram illustrating an example of the overall configuration of a self-service checkout register system 5 according to a first embodiment. As illustrated in FIG. 1, the self-service checkout register system 5 includes a camera 30, a self-service checkout register 50, an administrator terminal 60, and an information processing apparatus 100.

The information processing apparatus 100 is one example of a computer that is connected to the camera 30 and the self-service checkout register 50. The information processing apparatus 100 is connected to the administrator terminal 60 via a network 3 that is applicable to various communication networks irrespective of a wired or wireless manner. The camera 30 and the self-service checkout register 50 may be connected to the information processing apparatus 100 via the network 3.

The camera 30 is one example of a camera that captures a video image of a region including the self-service checkout register 50. The camera 30 transmits data on the video image to the information processing apparatus 100. In a description below, the data on the video image is sometimes referred to as "video image data" or is sometimes simply referred to as a "video image".

In the video image data, a plurality of image frames obtained in time series are included. A frame number is assigned to each of the image frames in an ascending order in time series. A single image frame is image data of a still image that is captured by the camera 30 at a certain timing. In a description below, the image data is sometimes simply referred to as an "image".

The self-service checkout register 50 is one example of a POS checkout register system or an accounting machine in which a user 2 who purchases a commodity product performs a series of processes between a process of reading a bar code assigned to the commodity product and a process of calculating a payment amount. For example, if the user 2 moves a commodity product targeted for a purchase to a scan region included in the self-service checkout register 50, the self-service checkout register 50 scans the bar code assigned to the commodity product, and registers the commodity product as the commodity product targeted for the purchase.

In addition, as described above, the self-service checkout register 50 is one example of a self-service checkout register in which a customer registers the commodity products to be purchased (checkout register work) and makes a payment by himself or herself, and is called, for example, self-checkout, automated checkout, self-checkout machine, self-check-out register, or the like. The bar code is a kind of an identifier representing a numerical value or a letter according to the width of each of the lines constituting a striped pattern shape, and it is possible to specify an amount of money, a category (for example, foods), or the like of a commodity product by scanning (reading) the bar code by the self-service checkout register 50. The bar code is one example of a code, and, in addition to the bar code, it is possible to use a two-dimensional code, such as a quick response (QR) code, having the same function.

The user 2 repeatedly performs a motion of registering the commodity product described above, and, when a scan of the commodity products has been completed, the user 2 operates a touch panel of the self-service checkout register 50, and makes a request for calculation of a payment amount. When the self-service checkout register 50 receives the request for calculation of the payment amount, the self-service checkout register 50 presents the number of commodity products targeted for the purchase, an amount of money for the purchase, and the like, and then, performs a process of calculation of the payment amount. The self-service checkout register 50 stores, as self-service checkout register data (commodity product information) in a storage unit, information on the commodity products scanned in a period of time between a point at which the user 2 starts the scan and a point at which the user 2 makes the request for calculation of the payment amount, and then, transmits the information to the information processing apparatus 100. The user 2 carries the commodity products by using a carrying tool, such as a shopping basket or a commodity product cart, that is used to put the commodity products that have been selected inside of a store and that are targeted for the purchase and carry the selected commodity products to the self-service checkout register.

The administrator terminal 60 is one example of a terminal device that is used by an administrator of the store. The administrator terminal 60 receives, from the information processing apparatus 100, a notification of an alert or the like indicating that a fraud related to a purchase of a commodity product has been conducted.

With this configuration, the information processing apparatus 100 acquires video image data on a person who is scanning a bar code assigned to a commodity product to the self-service checkout register 50. The information processing apparatus 100 specifies, by inputting the acquired video image data to the first machine learning model, the commodity product that has been gripped by the person within a range of an area that has been set for the bar code of the commodity product to be scanned to the self-service checkout register 50. In addition, it is also possible to specify the commodity product gripped by the person by using image analysis or the like instead of using the machine learning model. The information processing apparatus 100 acquires the commodity product information registered in the self-service checkout register 50 as a result of the self-service checkout register 50 scanning the bar code on the commodity product, and generates, by comparing the acquired commodity product information with the commodity product gripped by the person, an alert connected to an abnormality of a behavior of registering the commodity product to the self-service checkout register 50.

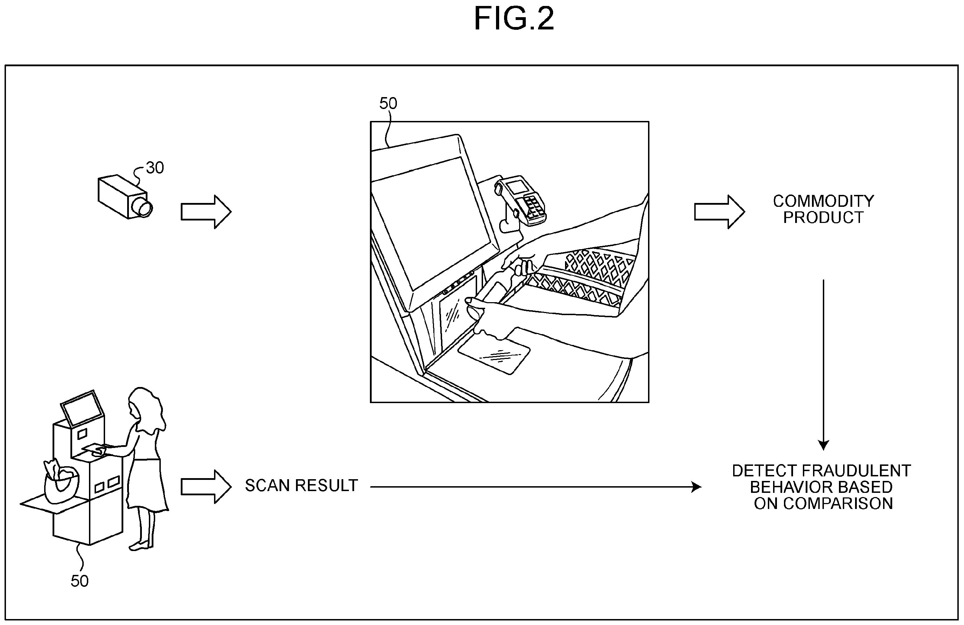

FIG. 2 is a diagram illustrating a detection example of an abnormal behavior according to the first embodiment. As illustrated in FIG. 2, the information processing apparatus 100 specifies a commodity product targeted for a scan by using Artificial

Intelligence (AI) from the video image data obtained by capturing a scan position at which the bar code assigned to the commodity product is read by the self-service checkout register 50. On the other hand, the information processing apparatus 100 acquires a commodity product that has been actually registered to the self-service checkout register 50 from the self-service checkout register 50. Then, the information processing apparatus 100 implements immediate detection of a fraudulent behavior by comparing the commodity product that has been specified from the video image data with the commodity product that has been acquired from the self-service checkout register 50.

In other words, the information processing apparatus 100 determines whether or not the commodity product that is different from the commodity product gripped by the user 2 at the self-service checkout register 50 has been registered to the self-service checkout register 50. Consequently, the information processing apparatus 100 is able to detect a fraud conducted at the self-service checkout register 50 by detecting a behavior of pretending to complete a scan of a high-priced commodity product by scanning a low-priced commodity product instead of the high-priced commodity product.

### Functional configuration

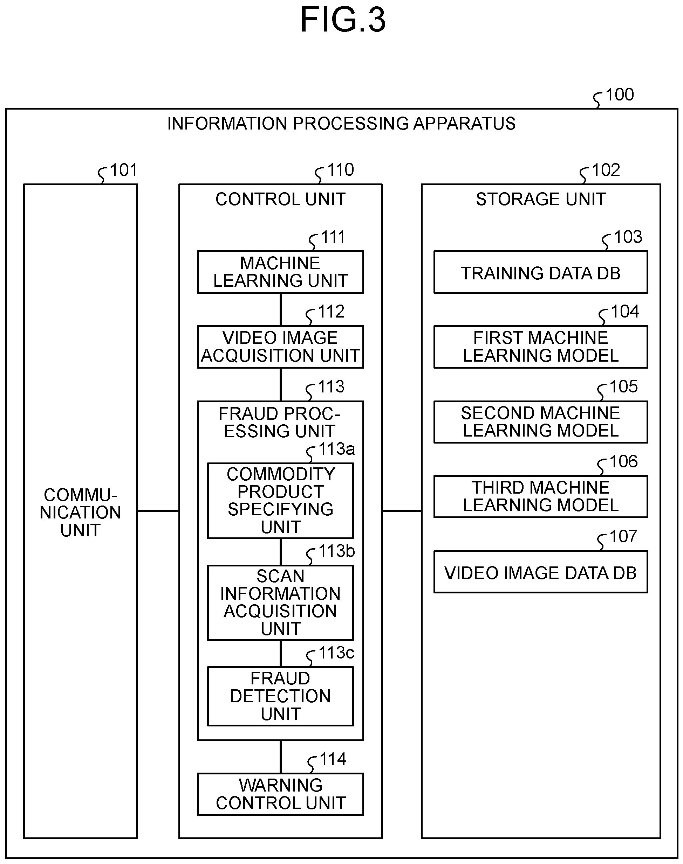

FIG. 3 is a functional block diagram illustrating a functional configuration of the information processing apparatus 100 according to the first embodiment. As illustrated in FIG. 3, the information processing apparatus 100 includes a communication unit 101, a storage unit 102, and a control unit 110.

The communication unit 101 is a processing unit that controls communication with another device and is implemented by, for example, a communication interface or the like. For example, the communication unit 101 receives video image data from the camera 30, and outputs a processing result obtained by the control unit 110 to the administrator terminal 60.

The storage unit 102 is a processing unit that stores therein various kinds of data, a program executed by the control unit 110, or the like, and is implemented by, for example, a memory, a hard disk, or the like. The storage unit 102 stores therein a training data DB 103, a first machine learning model 104, a second machine learning model 105, a third machine learning model 106, and a video image data DB 107.

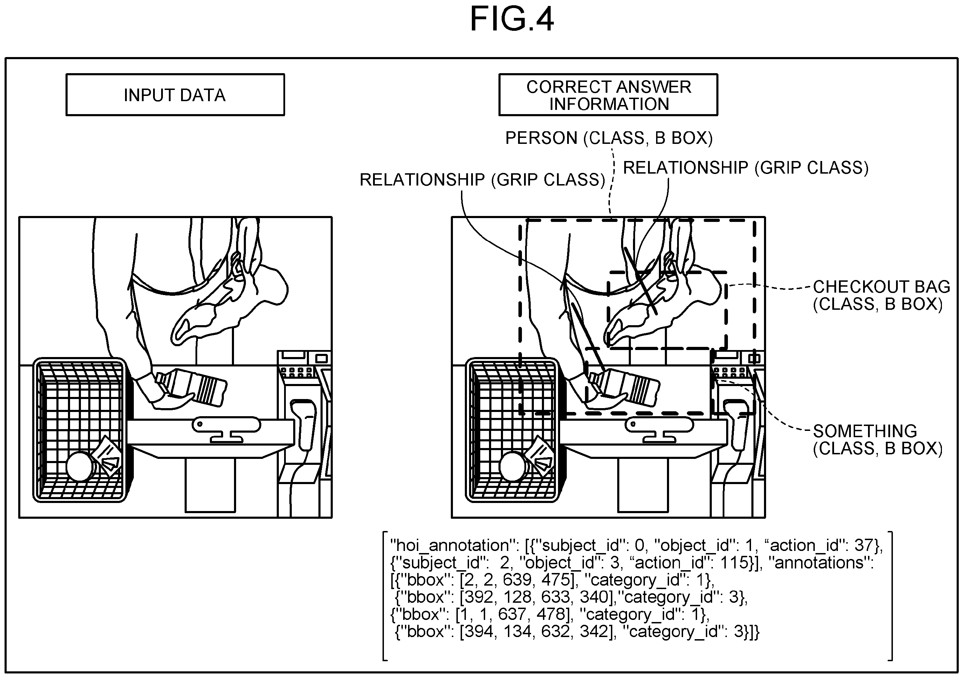

The training data DB 103 is a database that stores therein training data that is used for a training of each of the machine learning models. For example, a case will be described by using an example illustrated in FIG. 4 in which a model that is used for Human Object Interaction Detection (HOID) is used for the third machine learning model 106. FIG. 4 is a diagram illustrating training data. As illustrated in FIG. 4, each of the pieces of training data includes image data that corresponding to input data, and correct answer information (label) that has been set to the associated image data.

In the correct answer information, a class of a person and an object that are the detection target, a class that indicates an interaction between a person and an object, and a bounding box (Bbox indicating region information on an object) that indicates a region of each of the classes are set. For example, as the correct answer information, region information on a Something class that indicates an object that is a commodity product or the like and that is other than a checkout bag, region information on a class of a person that indicates a user who purchases a commodity product, and a relationship (grip class) that indicates an interaction between the Something class and the class of the person are set. In other words, as the correct answer information, information on an object that is being gripped by a person is set. In addition, the class of the person is one example of the first class, the Something class is one example of the second class, the region information on the class of the person is one example of the first region, the region information on the class of Something is one example of the second region, and the relationship between the person and the object is one example of the interaction.

In addition, as the correct answer information, region information on a class of a checkout bag that indicates a checkout bag, region information of a class of a person that indicates a user who uses the checkout bag, and a relationship (grip class) that indicates an interaction between the class of the checkout bag and the class of the person are set. In other words, as the correct answer information, information on the checkout bag that is being gripped by the person is set.

In general, if a Something class is generated by using a normal object identification (object recognition), all of the backgrounds, clothes, small goods, and the like that are not related to a task are consequently detected. In addition, all of these items correspond to Something, so that a lot of Bboxes are just identified in the image data and nothing is recognized. In a case of the HOID, it is possible to recognize a special relationship (there may be another case indicating sitting, operating, etc.) that indicates an object that is held by a person, so that it is possible to use for a task (for example, a fraud detection task to be performed at the self-service checkout register) as meaningful information. After an object has been detected as Something, a checkout bag or the like is identified as a unique class represented by Bag (checkout bag). The checkout bag is valuable information for the fraud detection task performed at the self-service checkout register, but is not valuable information for other tasks. Accordingly, it is worth to use on the basis of unique knowledge of the fraud detection task that is performed at the self-service checkout register in a course of a motion of taking out a commodity product from a basket (shopping basket) and putting the commodity product into the bag, and thus, a useful effect is obtained.

A description will be given here by referring back to FIG. 3. The first machine learning model 104 is one example of a machine learning model that has been trained to identify a commodity product that has been gripped by a person who appears in image data. For example, the first machine learning model 104 specifies and outputs, in accordance with an input of the video image data, the commodity product that has been gripped by the person within a range (for example, a scan position) of an area that has been set for scanning the code of the commodity product to the self-service checkout register 50.

The second machine learning model 105 is one example of a machine learning model that has been trained to identify an attribute related to an external appearance of the commodity product gripped by the person who appears in the image data. For example, the second machine learning model 105 specifies and outputs, in accordance with an input of the video image data, as the attribute related to the external appearance of the commodity product that has been gripped by the person, a size of the commodity product, a shape of the commodity product, a color of the commodity product, a texture of the commodity product, a weight of the commodity product, the number of commodity products, and the like.

The third machine learning model 106 is one example of a machine learning model that has been trained to identify a person and an object (for example, a person and storage, a person and a commodity product, etc.) appearing in the image data. Specifically, the third machine learning model 106 is a machine learning model that identifies, from the input image data, a person, a commodity product, and a relationship between the person and the commodity product, and then, outputs the identification result. For example, a model used for the HOID may be used for the third machine learning model 106, and also, a machine learning model using various neural networks may be used for the third machine learning model 106. In a case of the HOID, the item of "the region information on a person and a class, the class of a commodity product (object) and the region information, and the interaction between the person and the commodity product" is output.

The video image data DB 107 is a database that stores therein the video image data that has been captured by the camera 30 that is installed in the self-service checkout register 50. For example, the video image data DB 107 stores therein video image data obtained by each of the self-service checkout registers 50 or each of the cameras 30.

The control unit 110 is a processing unit that manages the entirety of the information processing apparatus 100 and is implemented by, for example, a processor or the like. The control unit 110, includes a machine learning unit 111, a video image acquisition unit 112, a fraud processing unit 113, and a warning control unit 114. In addition, the machine learning unit 111, the video image acquisition unit 112, the fraud processing unit 113, and the warning control unit 114 are implemented by an electronic circuit that is included in a processor or implemented by a process or the like that is executed by the processor.

### Machine learning

The machine learning unit 111 is a processing unit that performs machine learning on each of the machine learning models by using each of the pieces of training data that are stored in the training data DB 103.

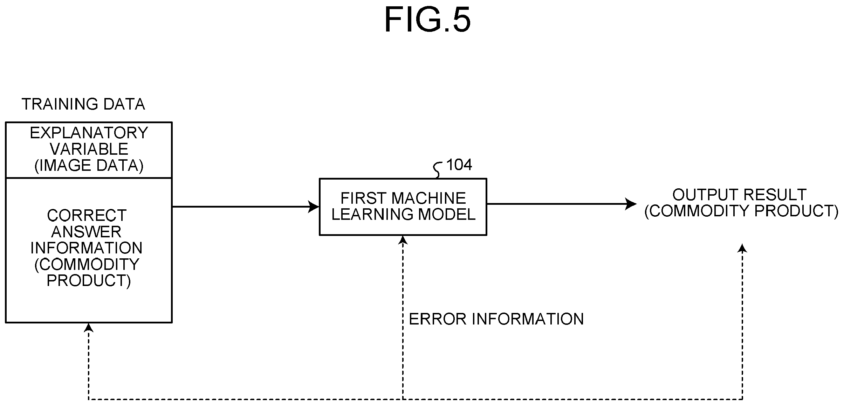

FIG. 5 is a diagram illustrating machine learning performed on the first machine learning model 104. As illustrated in FIG. 5, the machine learning unit 111 inputs, to the first machine learning model 104, the training data in which "image data" is used as an explanatory variable and a "commodity product" is used as an objective variable, and then, acquires an output result of a "commodity product" in the first machine learning model 104. Then, the machine learning unit 111 calculates error information indicating an error between the output result of the "commodity product" and the objective variable of the "commodity product" in the first machine learning model 104. After that, the machine learning unit 111 performs machine learning that updates the parameters of the first machine learning model 104 by using error back propagation such that the error is decreased. In addition, the commodity product mentioned here includes various kinds of information for specifying a commodity product including a commodity product itself, a name of a commodity product, a category or a type of a commodity product, an item of a commodity product, and the like.

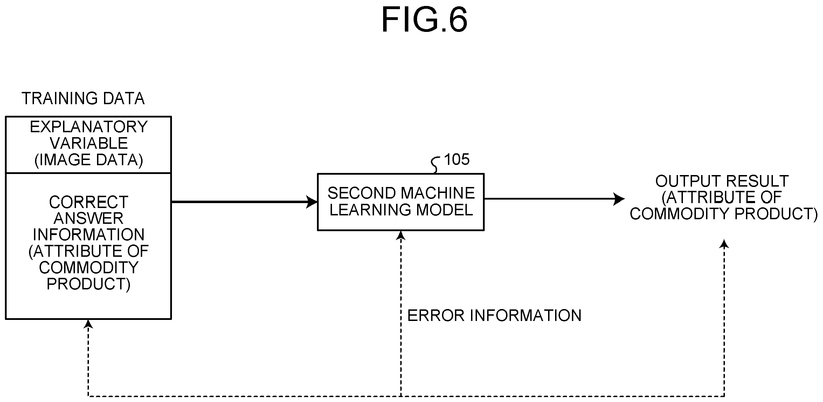

FIG. 6 is a diagram illustrating machine learning performed on the second machine learning model 105. As illustrated in FIG. 6, the machine learning unit 111 inputs, to the second machine learning model 105, training data in which "image data" is used as an explanatory variable and an "attribute of the commodity product" is used as an objective variable, and then, acquires an output result of the "attribute of the commodity product" in the second machine learning model 105. Then, the machine learning unit 111 calculates error information indicating an error between the output result of the "attribute of the commodity product" and the objective variable of the "attribute of the commodity product" in the second machine learning model 105. After that, the machine learning unit 111 performs machine learning that updates the parameters of the second machine learning model 105 by using error back propagation such that the error is decreased.

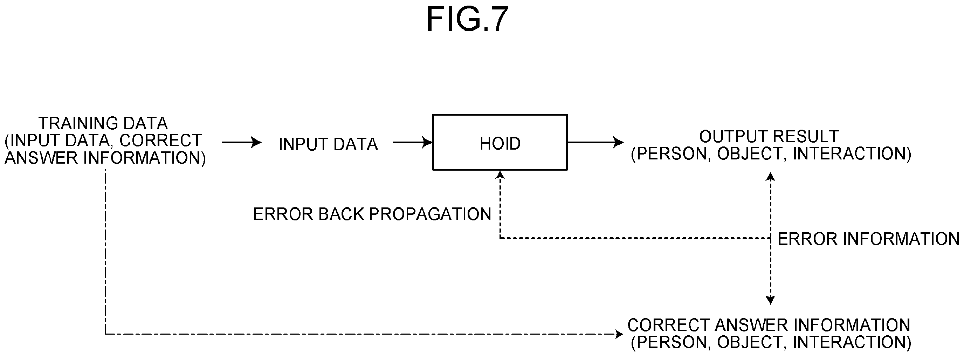

FIG. 7 is a diagram illustrating machine learning performed on the third machine learning model 106. FIG. 7 illustrates an example in which the HOID is used for the third machine learning model 106. As illustrated in FIG. 7, the machine learning unit 111 inputs the input data on the training data to the HOID, and acquires an output result of the HOID. In the output result, the class of the person, the class of the object, the interaction between the person and the object, and the like that are detected by the HOID are included.

Then, the machine learning unit 111 calculates error information indicating an error between correct answer information on the training data and the output result of the HOID, and performs machine learning that updates the parameters of the HOID by using error back propagation such that the error is decreased.

### Fraud detection process

The fraud processing unit 113 is a processing unit that includes a commodity product specifying unit 113a, a scan information acquisition unit 113b, and a fraud detection unit 113c, and that detects a fraudulent behavior that is exhibited by a user and that occurs at the self-service checkout register 50.

### Fraud detection process: Specifying of commodity product

The commodity product specifying unit 113a is a processing unit that specifies, from the video image data acquired by the video image acquisition unit 112, a commodity product that has been gripped by a person, an attribute of the commodity product that has been gripped by the person, and the like. Then, the commodity product specifying unit 113a outputs the outputs the specified information to the fraud detection unit 113c.

For example, the commodity product specifying unit 113a inputs the video image data to the first machine learning model 104, so that the commodity product specifying unit 113a specifies the commodity product that has been gripped by the person within a range of the area that has been set for a bar code of a commodity product to be scanned to the self-service checkout register 50. In other words, the commodity product specifying unit 113a specifies a commodity product that is being gripped until the commodity product reaches at the scan position after the commodity product has been taken out from a shopping basket, a commodity product that is gripped at the scan position, or a commodity product that has been placed around the scan position.

In addition, the commodity product specifying unit 113a specifies, by using the third machine learning model 106, the image data that is obtained by capturing a state in which the commodity product is located at the scan position from each of the pieces of image data included in the video image data. Then, by inputting the image data that is obtained by capturing a state in which the commodity product is located at the scan position to the first machine learning model 104, the commodity product specifying unit 113a is also able to specify the commodity product that has been gripped by the person at the scan position.

In addition, by inputting the video image data to the second machine learning model 105, the commodity product specifying unit 113a specifies the attribute related to the external appearance of the commodity product that has been gripped by the person. In other words, the commodity product specifying unit 113a specifies, regarding the commodity product that is being gripped until the commodity product reaches the scan position after the commodity product has been taken out from the shopping basket, a size of the commodity product, a shape of the commodity product, a color of the commodity product, a texture of the commodity product, a weight of the commodity product, the number of commodity products, and the like. In other words, the commodity product specifying unit 113a specifies the characteristics of the external appearance of the gripped commodity product.

### Fraud detection process: Scan information

The scan information acquisition unit 113b is a processing unit that acquires the commodity product information that has been registered to the self-service checkout register 50 by scanning the bar code on the commodity product by the self-service checkout register 50. For example, the scan information acquisition unit 113b acquires, as the commodity product information, a name of the commodity product, an amount of money, an attribute of the commodity product (for example, a size of the commodity product, a shape of the commodity product, a color of the commodity product, a texture of the commodity product, a weight of the commodity product, the number of commodity products, etc.).

In addition, the scan information acquisition unit 113b is able to estimate the attribute of the commodity product from the name of the commodity product, the amount of money, or the like, and is also able to estimate the attribute of the other commodity products from a commodity product name, an amount of money, and at least one commodity product. For example, the scan information acquisition unit 113b is able to estimate the attribute of the commodity product by using a table in which the name of the commodity product, the amount of money, and the attribute of the commodity product are associated or by using a machine learning model or the like that is used to estimate the attribute of the commodity product from the name of the commodity product, the amount of money, and the like.

In addition, the scan information acquisition unit 113b is able to acquire not only the scan information that has been registered to the self-service checkout register 50 as a result of the bar code being scanned, but also the commodity product information, as the scan information, that is obtained as a result of being selected and registered by, for example, the touch panel of the self-service checkout register 50.

### Fraud detection process: Fraud detection

The fraud detection unit 113c is a processing unit that detects an abnormality (fraud) of a behavior of registering the commodity product to the self-service checkout register 50 by comparing the commodity product information that has been acquired by the scan information acquisition unit 113b with the commodity product that has been gripped by the person specified by the commodity product specifying unit 113a. For example, if the commodity products do not match, the fraud detection unit 113c detects that a fraudulent behavior has occurred, and notifies the warning control unit 114 of the information on the self-service checkout register 50 in which the fraud has occurred, the information on the fraud, or the like. In the following, a specific example of the fraud detection will be described.

### Fraud detection process: Specific example 1

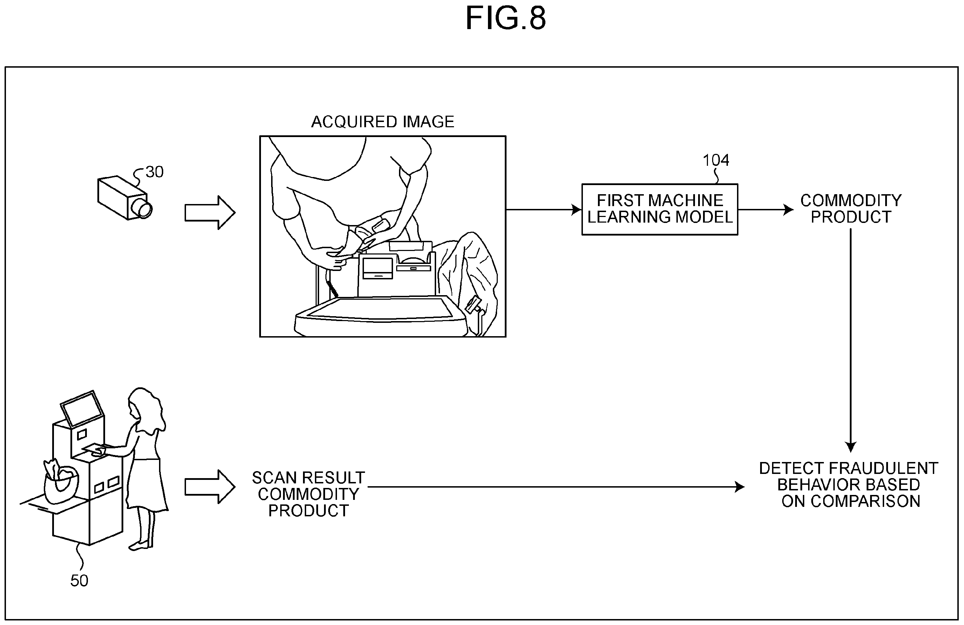

A specific example 1 is a technique for fraud detection performed on the basis of analysis of image data and on the basis of the scan information. FIG. 8 is a diagram illustrating the detection example 1 of an abnormal behavior according to the first embodiment. As illustrated in FIG. 8, the fraud processing unit 113 acquires the image data captured by the camera 30, inputs the acquired image data to the first machine learning model 104, and then specifies the commodity product that has been gripped by the person at the scan position. In contrast, the fraud processing unit 113 acquires, from the self-service checkout register 50, the information on the commodity product that has been actually scanned. Then, the fraud processing unit 113 compares both of the commodity products, and detects a fraudulent behavior in the case where the commodity products do not match.

### Fraud detection process: Specific example 2

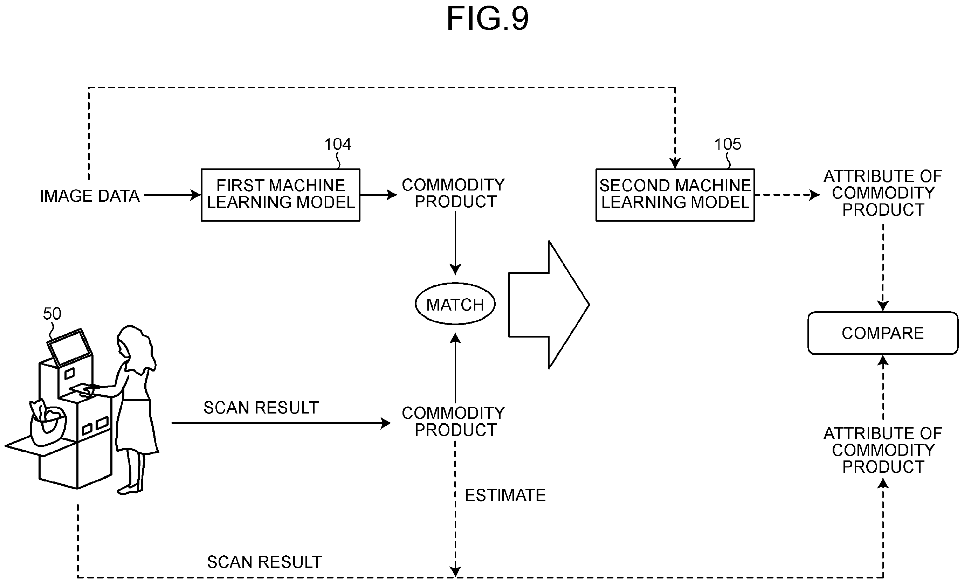

A specific example 2 is a technique for further strongly detect a fraudulent behavior by performing detailed fraud determination in the case where it has been determined that the behavior is not fraudulent in the specific example 1. Furthermore, the technique indicated in the specific example 2 need not always be performed after the specific example 1, but only the technique indicated in the specific example 2 may be performed. FIG. 9 is a diagram illustrating the detection example 2 of an abnormal behavior according to the first embodiment. As illustrated in FIG. 9, in the case where the commodity products match on the basis of the technique for the specific example 1, the fraud processing unit 113 inputs, to the second machine learning model 105, the image data that has been captured by the camera 30 and that has been input to the first machine learning model 104, and then specifies the attribute of the commodity product that has been gripped by the person at the scan position. In contrast, the fraud processing unit 113 acquires the attribute of the commodity product that has been actually scanned by the self-service checkout register 50 via the scan information acquisition unit 113b. Then, the fraud processing unit 113 compares the attributes of both of the commodity products, and detects a fraudulent behavior in the case where the attributes of the commodity products do not match.

### Fraud detection process: Specific example 3

A specific example 3 is a technique for speeding up the fraud detection process by inputting each of the pieces of image data included in the video image data to the model by using the HOID.

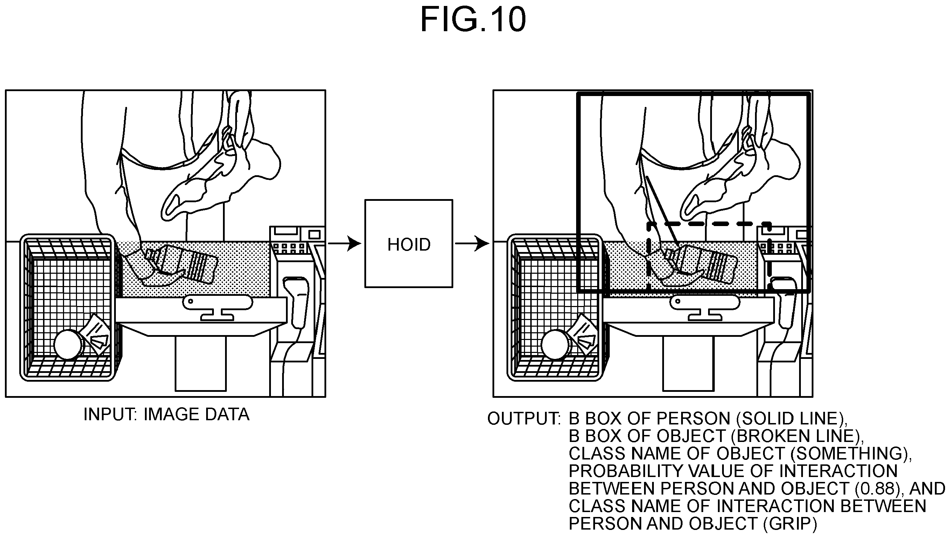

FIG. 10 is a diagram illustrating detection of a commodity product. FIG. 10 illustrates image data that is input to the HOID and an output result obtained from the HOID. Furthermore, FIG. 10 illustrates a Bbox of the person is indicated by a solid line, and a Bbox of the object is indicated by a broken line. As illustrated in FIG. 10, in the output result obtained from the HOID, the Bbox of the person, the Bbox of the object, a probability value of the interaction between the person and the object, a class name, and the like are included. The fraud processing unit 113 extracts a region of the commodity product that is being gripped by the person by referring to the Bbox of the object included in the output result and cutting out, from the image data, the Bbox of the object, that is, a partial image associated with a frame indicated by the broken line illustrated in FIG. 10.

In other words, the fraud processing unit 113 is able to detect, by inputting the image data to the HOID, the region of the person, the region of the commodity product, the relationship between the person and the commodity product, and the behavior of the person who is gripping the commodity product at scan position that is already known. In this way, the fraud processing unit 113 is able to specify the image data in which the behavior of the person who is gripping the commodity product has been detected at the already known scan position from among the plurality of pieces of image data included in the video image data that is acquired at any time.

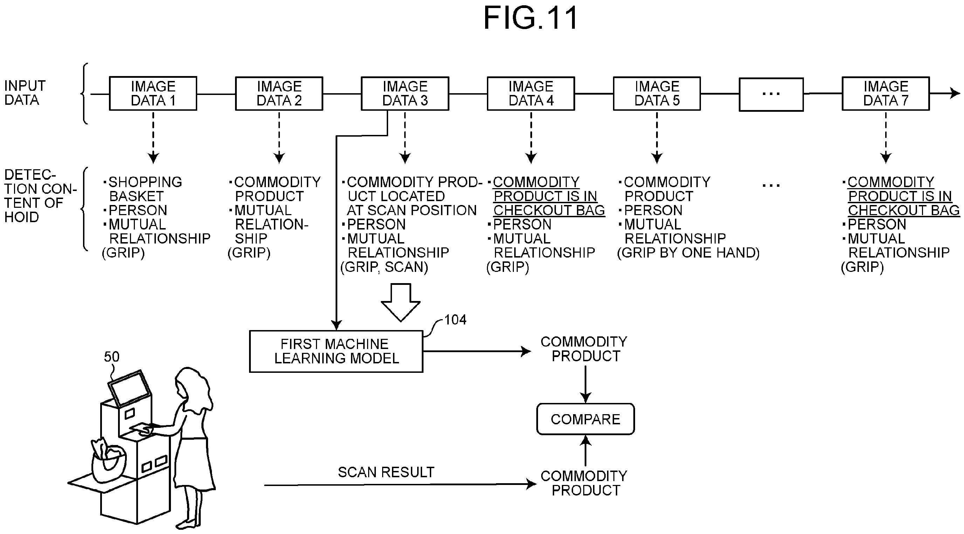

FIG. 11 is a diagram illustrating the detection example 3 of an abnormal behavior according to the first embodiment. FIG. 11 illustrates pieces of image data 1 to 7 that are the input data to the HOID and the detection content of the HOID obtained when the pieces of the image data 1 to 7 are sequentially input. In addition, in FIG. 11, the explanations described associated with the pieces of image data are information that appears on the image data, are unknown information as the input to the HOID, and are information targeted for detection by using the HOID.

As illustrated in FIG. 11, the fraud processing unit 113 acquires the output result by acquiring the image data 1 in which the person who is taking out the commodity product from the shopping basket has been captured, and by inputting the acquired image data 1 to the HOID. Then, the fraud processing unit 113 detects the region of the person, the region of the commodity product, the relationship (grip) between the person and the commodity product, and the behavior of a user 2 who has taken out the commodity product.

Subsequently, the fraud processing unit 113 acquires the output result by acquiring image data 2 in which the person who is gripping the commodity product that has been taken out from the shopping basket has been captured, and by inputting the acquired image data 2 to the HOID. Then, the fraud processing unit 113 detects the region of the person, the region of the commodity product, the relationship (grip) between the person and the commodity product, and the behavior of the user 2 who is gripping the commodity product.

Subsequently, the fraud processing unit 113 acquires the output result by acquiring image data 3 in which the person who is gripping the commodity product at the scan position has been captured, and by inputting the acquired image data 3 to the HOID. Then, the fraud processing unit 113 detects the region of the person, the region of the commodity product, the relationship (grip) between the person and the commodity product, and the behavior of the user 2 who is gripping the commodity product at the scan position. Here, the fraud processing unit 113 specifies the image data 3 as the target for determination by using the HOID as a result of detecting "the user 2 who is gripping the commodity product at the scan position".

Then, the fraud processing unit 113 specifies the commodity product that has been gripped by the person at the scan position by inputting the specified image data 3 to the first machine learning model 104. In contrast, the fraud processing unit 113 acquires the information on the commodity product that has been actually scanned at the same timing (for example, a time difference is within a predetermined time period) as the image data 3 from the self-service checkout register 50. Then, the fraud processing unit 113 compares both of the commodity products, and detects a fraudulent behavior in the case where the commodity products do not match. In addition, it is also possible to use the specific example 3 and the specific example 2 in combination.

### Alert report

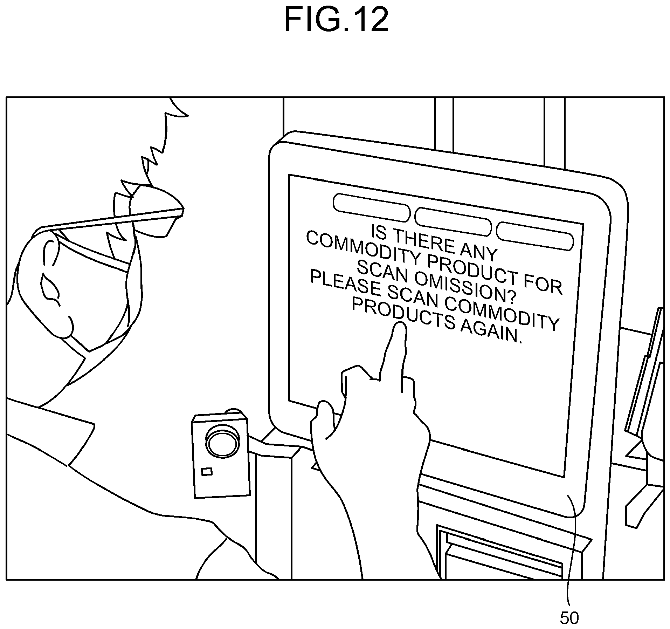

A warning control unit 114 is a processing unit that generates an alert and that performs report control of the alert in the case where a fraudulent behavior (fraudulent motion) has been detected by the fraud detection unit 113c. For example, the warning control unit 114 generates an alert indicating that the commodity product that has been registered by a person to the self-service checkout register 50 is abnormal, and outputs the generated alert to the self-service checkout register 50 and the administrator terminal 60. For example, as the alert, the warning control unit 114 displays a message on the self-service checkout register 50. FIG. 12 is a diagram illustrating a report example of the alert. As illustrated in FIG. 12, the warning control unit 114 causes the message indicating that "Is there any commodity product for a scan omission? Please scan the commodity products again.", or the like to be displayed on a display screen, such as a touch panel, of the self-service checkout register 50.

In addition, the warning control unit 114 is also able to report an alert that indicates specific information to the self-service checkout register 50 in the case of detection of a fraud (what is called the banana trick) that has been conducted by using tactics for purchasing a high-priced commodity product at a low price by manually inputting a low-priced commodity product at the touch panel of the self-service checkout register 50 without scanning the high-priced commodity product.

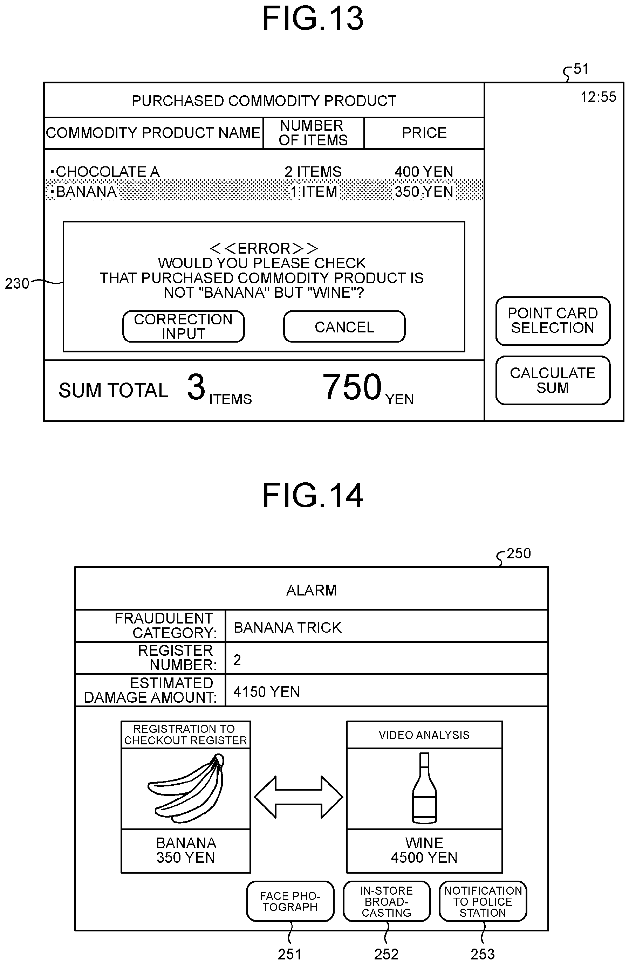

FIG. 13 is a diagram illustrating an alert display example that is displayed on the self-service checkout register 50. FIG. 13 illustrates an alert that is displayed on the self-service checkout register 50 at the time of detection of the banana trick. As illustrated in FIG. 13, an alert window 230 is displayed on a touch panel 51 of the self-service checkout register 50. A commodity product item of a "banana" that has been registered at a checkout register by way of a manual input and a commodity product item "wine" that has been specified on the basis of image analysis performed by using each of the machine learning models are displayed on the alert window 230 in a state in which both of the commodity product items are able to be compared. In addition to this, it is possible to include a notification to prompt to perform a correction input again in the alert window 230. According to this sort of display on the alert window 230, it is possible to warn a user that the banana trick has been detected indicating that a "banana" has been manually input to the checkout register at the time of registration instead of "wine" that is to be manually input to the checkout register at the time of registration. Consequently, it is possible to prompt to stop calculation of a payment amount caused by the banana trick, and as a result, it is possible to suppress a damage to the store caused by the banana trick. In addition, the warning control unit 114 is able to output the content of the alert illustrated in FIG. 13 by voice.

In addition, the warning control unit 114 causes a warning lamp installed in the self-service checkout register 50 to be turned on, causes an identifier of the self-service checkout register 50 and a message indicating that a fraud possibly occurs to be displayed on the administrator terminal 60, and causes the identifier of the self-service checkout register 50 and a message indicating an occurrence of the fraud and indicating that a check is needed to be transmitted to the terminal that is used by a store clerk who is present in an inside of a store.

FIG. 14 is a diagram illustrating an alert display example output to the store clerk. FIG. 14 illustrates an alert that is displayed on the display unit of the administrator terminal 60 at the time of detection of the banana trick. As illustrated in FIG. 14, an alert window 250 is displayed on the display unit of the administrator terminal 60. A set of the commodity product item of the "banana" and a price of "350 yen" that has been registered at a checkout register by way of a manual input and a set of the commodity product item of "wine" that has been specified on the basis of image analysis and a price of "4500 yen" are displayed on the alert window 250 in a state in which both of the sets are able to be compared. Furthermore, a fraudulent category "banana trick", a checkout register number "2" in which the banana trick is occurring, and an estimated amount of damage "4150 yen (=4500 yen - 350 yen)" occurring at the time of calculation of a payment amount caused by the banana trick are displayed on the alert window 250. In addition to this, a display of a face photograph or the like of the user 2 who uses the self-service checkout register 50 to which a checkout register number "2" has been assigned, in-store broadcasting, GUI parts 251 to 253 that receive a request to send a notification or the like to a police station or the like, and the like are displayed on the alert window 250. According to this sort of display on the alert window 250, it is possible to implement a report about an occurrence of a damage of the banana trick, the grasping of the degree of the damage, and, furthermore, presentation of various countermeasures against the damage. Consequently, it is possible to prompt the user 2 to avoid the banana trick, and as a result, it is possible to suppress a damage to the store caused by the banana trick.

In addition, in the case where the warning control unit 114 generates an alert related to an abnormality of a behavior of registering a commodity product to the self-service checkout register 50, the warning control unit 114 causes the camera 30 included in the self-service checkout register 50 to capture an image of a person, and to store the image data on the captured person and the alert in an associated manner in the storage unit. By doing so, it is possible to collect information on a fraudulent person who exhibits a fraudulent behavior, so that it is possible to make use of various measures to prevent the fraudulent behavior by detecting, at the entrance of the store, a customer who visits the store and who has a history of exhibiting a fraudulent behavior or the like. In addition, the warning control unit 114 is able to detect a fraudulent person from the image data on the person who uses the self-service checkout register 50, detect a fraudulent person at the entrance of the store, and the like by performing supervised learning using the image data on the fraudulent person and by generating the machine learning models. In addition, the warning control unit 114 is also able to acquire and store information on a credit card that is used by a person who has exhibited a fraudulent behavior from the self-service checkout register 50.

### Flow of process

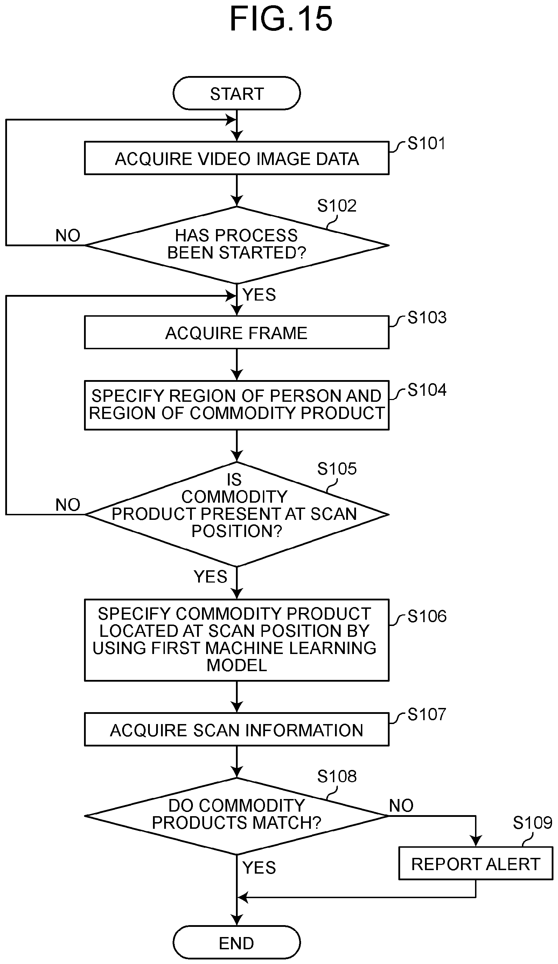

FIG. 15 is a flowchart illustrating the flow of the process. As illustrated in FIG. 15, the information processing apparatus 100 acquires the video image data at any time (Step S101).

Subsequently, if the information processing apparatus 100 receives an instruction to start the process (Yes at Step S102), the information processing apparatus 100 acquires a frame included in the video image data (Step S103). Here, if the video image data is not present, the information processing apparatus 100 ends the process. In contrast, if the video image data is present, the information processing apparatus 100 specifies a region of the person, a region of the commodity product, and the like by using the third machine learning model 106 (Step S104).

Here, if a region of a commodity product is not detected at the scan position (No at Step S105), the information processing apparatus 100 repeats the process at Step S103 and the subsequent processes. In contrast, if a region of a commodity product has been detected at the scan position (Yes at Step S105), the information processing apparatus 100 inputs the frame (image data) in which the region of the commodity product has been detected at the scan position to the first machine learning model 104, and specifies the commodity product located at the scan position (Step S106).

Then, the information processing apparatus 100 acquires the scan information from the self-service checkout register 50, specifies the scanned commodity product (Step S107), and compares the commodity product that has been specified from the scan information with the commodity product that has been specified by the first machine learning model 104 (Step S108).

After that, if the compared commodity products do not match (No at Step S108), the information processing apparatus 100 reports an alert (Step S109), whereas, if the compared commodity products match (Yes at Step S108), the information processing apparatus 100 ends the process.

### Effects

As described above, the information processing apparatus 100 acquires the video image data on the person who is scanning the code of the commodity product to the self-service checkout register 50. The information processing apparatus 100 specifies, by inputting the acquired video image data to the first machine learning model, the commodity product that has been gripped by the person within the range of the area that has been set for the code of the commodity product to be scanned to the self-service checkout register 50. The information processing apparatus 100 acquires, by scanning the code of the commodity product by using the self-service checkout register 50, the commodity product information that has been registered to the self-service checkout register 50, and detects the fraudulent behavior by comparing the acquired commodity product information with the commodity product that has been gripped by the person. Consequently, the information processing apparatus 100 is able to detect a fraud conducted at the self-service checkout register 50. In addition, the information processing apparatus 100 is able to detect the fraud without performing a complicated process, so that it is possible to speed up the fraud detection process.

In addition, the information processing apparatus 100 detects the fraudulent behavior by comparing the attributes of the commodity products. Consequently, the information processing apparatus 100 is able to detect the fraud in two stages, so that, even if a behavior that is not able to be determined to be a fraud on the basis of only the commodity product or an unknown fraud that is not yet conducted occurs, it is possible to reduce a scanning omission of the fraud.

In addition, when an alert related to an abnormality of a behavior of registering the commodity product to the self-service checkout register 50 is generated, the information processing apparatus 100 causes the camera included in the self-service checkout register 50 to capture an image of the person, and stores the image data on the captured person and the alert in an associated manner in the storage unit. Accordingly, the information processing apparatus 100 is able to collect and hold the information on the fraudulent person who exhibits the fraudulent behavior, so that it is possible to make use of various measures to prevent the fraudulent behavior by detecting a visit of the fraudulent person to the store from the captured data obtained by the camera that captures a customer who visits the store.

In addition, the information processing apparatus 100 is also able to acquire and store information on a credit card that is used by a person who has exhibited a fraudulent behavior from the self-service checkout register 50, so that it is possible to charge a fee via a credit card company in the case where the fraudulent behavior has been confirmed.

In addition, the information processing apparatus 100 specifies that the commodity product is located at the scan position by using the HOID, so that it is possible to narrow down the pieces of image data that are used to specify the commodity product, and it is thus possible to detect a fraud conducted at the self-service checkout register 50 in both of the aspects of a speeding up of the process and improvement of the accuracy.

In addition, the information processing apparatus 100 generates an alert indicating that there is a commodity product that has not yet been registered to the self-service checkout register 50 by a person, or, indicating that the commodity product that has been registered to the self-service checkout register 50 by a person is abnormal. Therefore, a store clerk or the like is able to react by listening the circumstances by using the information processing apparatus 100 before the person who has exhibited the fraudulent behavior leaves the store.

In addition, in the case where an alert related to an abnormality of a behavior of registering the commodity product to the self-service checkout register 50 has been generated, the information processing apparatus 100 outputs, from the self-service checkout register 50, a voice or a screen that makes the person located at the self-service checkout register 50 aware of a registration omission of the commodity product. Therefore, the information processing apparatus 100 is able to directly alert the person who is performing a scan even in a case of an inevitable mistake or even in a case of an intentional fraud, so that it is possible to reduce the mistake or the intentional fraud.

### (b) Second Embodiment

In the above explanation, a description has been given of the embodiments according to the present invention; however, the present invention may also be implemented with various kinds of embodiments other than the embodiments described above.

### Numerical value, etc.

The number of self-service checkout registers and cameras, examples of numerical values, examples of the training data, the number of pieces of training data, the machine the learning models, each of the class names, the number of classes, the data formats, and the like that are used in the embodiment described above are only examples and may be arbitrarily changed. Furthermore, the flow of the processes descried in each of the flowcharts may be changed as long as the processes do not conflict with each other. In addition, a model generated from various algorithms, such as a neural network, may be used for each of the models.

In addition, regarding a scan position and a position of a shopping basket, the information processing apparatus 100 is also able to use a known technology, such as another machine learning model for detecting a position, an object detection technology, or a position detection technology. For example, the information processing apparatus 100 is able to detect a position of a shopping basket on the basis of a difference between frames (image data) and a change in frames in time series, so that the information processing apparatus 100 may also perform detection by using the difference between frames and the change in frames in time series, or may also generate another model by using the difference between frames and the change in frames in time series. Furthermore, by designating a size of the shopping basket in advance, the information processing apparatus 100 is also able to identify the position of the shopping basket in the case where an object with that size has been detected from the image data. In addition, the scan position is a position that is fixed to an extent, so that the information processing apparatus 100 is also able to identify the position designated by an administrator or the like as the scan position.

### System

The flow of the processes, the control procedures, the specific names, and the information containing various kinds of data or parameters indicated in the above specification and drawings can be arbitrarily changed unless otherwise stated. Furthermore, specific examples, distributions, numerical values, and the like described in the embodiment are only examples and can be arbitrarily changed.

Furthermore, the specific shape of a separate or integrated device is not limited to the drawings. For example, the fraud processing unit 113 and the warning control unit 114 may be integrated. In other words, all or part of the device can be configured by functionally or physically separating or integrating any of the units in accordance with various loads or use conditions. In addition, all or any part of each of the processing functions performed by the each of the devices can be implemented by a CPU and by programs analyzed and executed by the CPU or implemented as hardware by wired logic.

Furthermore, all or any part of each of the processing functions performed by each of the devices can be implemented by a CPU and by programs analyzed and executed by the CPU or implemented as hardware by wired logic.

### Hardware

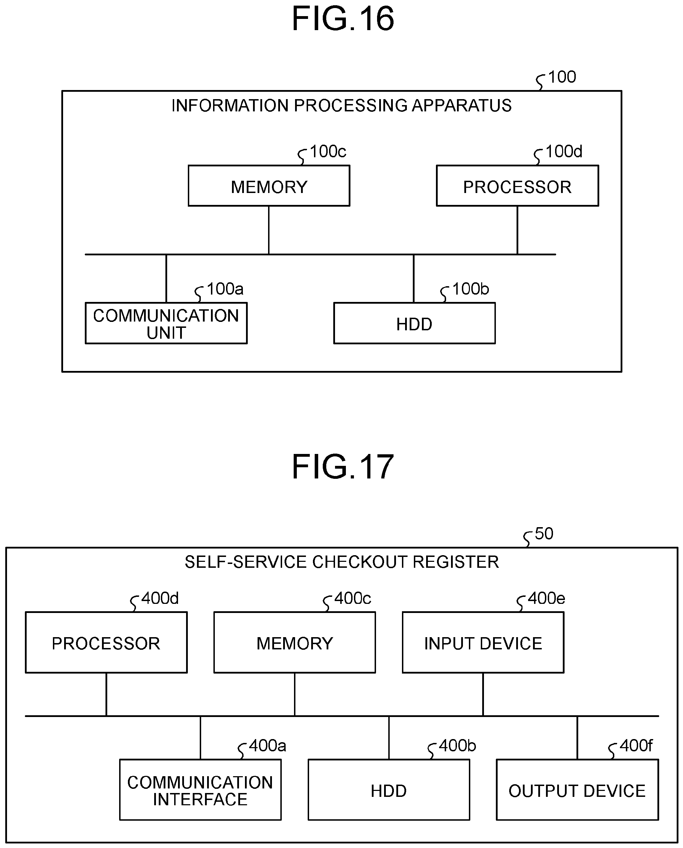

FIG. 16 is a diagram illustrating an example of a hardware configuration. Here, as one example, the information processing apparatus 100 will be described. As illustrated in FIG. 16, the information processing apparatus 100 includes a communication device 100a, a hard disk drive (HDD) 100b, a memory 100c, and a processor 100d. In addition, each of the units illustrated in FIG. 16 is connected each other via a bus or the like.

The communication device 100a is a network interface card or the like, and communicates with another device. The HDD 100b stores therein programs and the DB that operate the function illustrated in FIG. 3.

The processor 100d operates the process that executes each of the functions described above in FIG. 3 or the like by reading the programs that execute the same process as that performed by each of the processing units illustrated in FIG. 3 from the HDD 100b or the like and loading the read program in the memory 100c. For example, the process executes the same function as that performed by each of the processing units included in the information processing apparatus 100. Specifically, the processor 100d reads, from the HDD 100b or the like, the programs having the same function as that performed by each of the machine learning unit 111, the video image acquisition unit 112, the fraud processing unit 113, the warning control unit 114, and the like. Then, the processor 100d executes the process for executing the same process as that performed by each of the machine learning unit 111, the video image acquisition unit 112, the fraud processing unit 113, the warning control unit 114, and the like.

In this way, the information processing apparatus 100 is operated as an information processing apparatus that executes an information processing method by reading and executing the programs. In addition, the information processing apparatus 100 is also able to implement the same function as that described above in the embodiment by reading the programs described above from a recording medium by a medium recording device and executing the read programs described above. In addition, the programs described in another embodiment are not limited to be executed by the information processing apparatus 100. For example, the embodiment described above may also be similarly used in a case in which another computer or a server executes a program, or in a case in which another computer and a server cooperatively execute the program with each other.

The programs may be distributed via a network, such as the Internet. Furthermore, the programs may be executed by storing the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

FIG. 17 is a diagram illustrating an example of a hardware configuration of the self-service checkout register 50. As illustrated in FIG. 17, the self-service checkout register 50 includes a communication interface 400a, a HDD 400b, a memory 400c, a processor 400d, an input device 400e, and an output device 400f. In addition, each of the units illustrated in FIG. 17 is connected each other via a bus or the like.

The communication interface 400a is a network interface card or the like, and communicates with another device. The HDD 400b stores therein programs and data that operate each of the functions of the self-service checkout register 50.

The processor 400d is a hardware circuit that operates the process that executes each of the functions of the self-service checkout register 50 by reading the program that executes the process of each of the functions of the self-service checkout register 50 from the HDD 400b or the like and loading the read program in the memory 400c. In other words, the process executes the same function as that performed by each of the processing units included in the self-service checkout register 50.

In this way, by reading and executing the program for executing the process of each of the functions of the self-service checkout register 50, the self-service checkout register 50 is operated as an information processing apparatus that performs an operation control process. Furthermore, the self-service checkout register 50 is also able to implement each of the functions of the self-service checkout register 50 by reading the programs from a recording medium by a medium reading device and executing the read programs. In addition, the programs described in another embodiment are not limited to be executed by the self-service checkout register 50. For example, the present embodiment may also be similarly used in a case in which another computer or a server execute a program, or in a case in which another computer and a server cooperatively execute a program with each other.

Furthermore, the programs that execute the process of each of the functions of the self-service checkout register 50 can be distributed via a network, such as the Internet. Furthermore, these programs can be executed by recording the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

The input device 400e detects various input operations performed by a user, such as an input operation performed with respect to the programs executed by the processor 400d. Examples of the input operation include a touch operation or the like. In a case of the touch operation, the self-service checkout register 50 further includes a display unit, and the input operation detected by the input device 400e may be a touch operation performed on the display unit. The input device 400e may be, for example, a button, a touch panel, a proximity sensor, or the like. In addition, the input device 400e reads a bar code. The input device 400e is, for example, a bar code reader. The bar code reader includes a light source and an optical sensor and scans the bar code.

The output device 400f outputs data that is output from the program executed by the processor 400d via external device, such as an external display device, that is connected to the self-service checkout register 50. In addition, in the case where the self-service checkout register 50 includes a display unit, the self-service checkout register 50 need not include the output device 400f.

According to an aspect of an embodiment, it is possible to detect an error made or a fraud conducted at an accounting machine by a user.

## Claims

1. An information processing program that causes a computer (100) to execute a process comprising:
acquiring (113) video image data on a person who is scanning a code of a commodity product to an accounting machine;
specifying (113), by analyzing the acquired video image data, the commodity product that has been gripped by the person within a range of an area that is set for the code of the commodity product to be scanned to the accounting machine;
acquiring (113), by scanning the code of the commodity product by the accounting machine, commodity product information that has been registered to the accounting machine; and
generating (113), by comparing the acquired commodity product information with the specified commodity product that has been gripped by the person, an alert connected to an abnormality of a behavior of registering the commodity product to the accounting machine.

2. The information processing program according to claim 1, wherein the specifying (113) includes specifying, by inputting the acquired video image data to a first machine learning model, the commodity product that has been gripped by the person within the range of the area that is set for the code of the commodity product to be scanned to the accounting machine.

3. The information processing program according to claim 2,
wherein
the specifying (113) includes specifying, by inputting the acquired video image data to a second machine learning model, an attribute related to an external appearance of the commodity product that has been gripped by the person, and
the generating (113) includes
estimating an attribute related to the commodity product based on the commodity product information that has been acquired from the accounting machine, and
generating the alert when the estimated attribute related to the commodity product is different from the attribute related to the commodity product gripped by the person and that has been specified by using the second machine learning model.

4. The information processing program according to claim 2, wherein the process further includes:
specifying (113), by inputting the acquired video image data to a third machine learning model, a first region including a hand of the person, a second region including the commodity product, and a relationship between the first region and the second region; and
specifying (113) that the person has gripped the commodity product based on the specified first region, the specified second region, and the specified relationship, wherein
the specifying (113) includes specifying, by inputting, to the first machine learning model, the video image data in which it is specified by using the third machine learning model that the person has gripped the commodity product, the commodity product that has been gripped by the person within the range of the area.

5. The information processing program according to claim 1,
wherein the generating (113) includes generating, as the alert connected to the abnormality of the behavior of registering the commodity product to the accounting machine, an alert indicating that there is a commodity product that has not yet been registered to the accounting machine by the person, or, indicating that the commodity product that has been registered to the accounting machine by the person is abnormal.

6. The information processing program according to claim 1,
wherein the process further includes notifying (114), when the alert connected to the abnormality of the behavior of registering the commodity product to the accounting machine is generated, a terminal used by a store clerk of identification information on the accounting machine and the generated alert in an associated manner.

7. The information processing program according to claim 1,
wherein the generating (113) includes outputting, in a case where the alert connected to the abnormality of the behavior of registering the commodity product to the accounting machine has been generated, voice or a screen that makes the person located at the accounting machine aware of a registration omission of the commodity product from the accounting machine.

8. The information processing program according to claim 1,
wherein the process further includes:
capturing (114), when the alert connected to the abnormality of the behavior of registering the commodity product to the accounting machine is generated, the person by a camera included in the accounting machine; and
storing (114) image data on the captured person and the alert in an associated manner in a storage.

9. The information processing program according to claim 4,
wherein the process further includes:
identifying (113), by inputting the acquired video image data to the third machine learning model, the first region, the second region, and the relationship, wherein
the third machine learning model is a model that is used for Human Object Interaction Detection (HOID) and that is generated by performing machine learning such that a first class that indicates a person who purchases a commodity product and first region information that indicates a region in which the person appears, a second class that indicates an object including the commodity product and second region information that indicates a region in which the object appears, and an interaction between the first class and the second class are identified.

10. The information processing program according to claim 1,
wherein the generating (113) includes generating, when the commodity product information and the specified commodity product that has been gripped by the person do not match, the alert connected to the abnormality of the behavior of registering the commodity product to the accounting machine.

11. The information processing program according to claim 1,
wherein the accounting machine is a self-service checkout terminal.

12. An information processing method carried out by a computer (100), comprising:
acquiring (113) video image data on a person who is scanning a code of a commodity product to an accounting machine;
specifying (113), by analyzing the acquired video image data, the commodity product that has been gripped by the person within a range of an area that is set for the code of the commodity product to be scanned to the accounting machine;
acquiring (113), by scanning the code of the commodity product by the accounting machine, commodity product information that has been registered to the accounting machine; and
generating (113), by comparing the acquired commodity product information with the specified commodity product that has been gripped by the person, an alert connected to an abnormality of a behavior of registering the commodity product to the accounting machine.

13. An information processing apparatus (100) comprising:
a control unit (110) configured to;
acquire video image data on a person who is scanning a code of a commodity product to an accounting machine;
specify, by analyzing the acquired video image data, the commodity product that has been gripped by the person within a range of an area that is set for the code of the commodity product to be scanned to the accounting machine;
acquire, by scanning the code of the commodity product by the accounting machine, commodity product information that has been registered to the accounting machine; and
generate, by comparing the acquired commodity product information with the specified commodity product that has been gripped by the person, an alert connected to an abnormality of a behavior of registering the commodity product to the accounting machine.
